# EUROPEAN PATENT SPECIFICATION

(11) **EP 3 886 407 B1**
(45) Date of publication and mention of the grant of the patent: **29.11.2023**
(21) Application number: 19903890.2
(22) Date of filing: 29.05.2019
(51) Int. Cl.: H04M 1/02, G06F 1/16, H04M 1/03

(54) **MOBILE TERMINAL**
MOBILES ENDGERÄT
TERMINAL MOBILE

(30) Priority: 29.12.2018 CN 201822277849 U
(43) Date of publication of application: 29.09.2021
(73) Proprietor: GUANGDONG OPPO MOBILE TELECOMMUNICATIONS CORP., LTD., Wusha, Chang'an Dongguan Guangdong 523860 (CN)
(72) Inventor: HUANG, Maozhao, Dongguan, Guangdong 523860 (CN)
(74) Representative: Thorniley, Peter
(86) International application number: PCT/CN2019/089129
(87) International publication number: WO 2020/133908

(56) References cited:
- EP-A1- 2 975 489
- EP-A1- 3 410 252
- CN-A- 107 395 812
- US-A1- 2017 213 068

## Description

### TECHNICAL FIELD

The present disclosure relates to the technical field of mobile terminal, and more particularly, to a mobile terminal.

### BACKGROUND

With the development of terminal device technologies, more components are desired to be integrated in mobile phones to exert more diversified functions. However, as more and more devices are installed inside a terminal device, the body of the terminal device becomes increasingly larger, which hinders thinner and lighter configuration of the terminal device, thereby failing to meet the needs of users. EP2975489A1 discloses an electronic device with a protecting cover having a second display. EP3410252A1 discloses an electronic device including module in sunken area of layer. US2017/213068A1 discloses an electronic device with key module and method of manufacturing the same. CN107395812A discloses an electronic assembly and an electronic apparatus.

### SUMMARY

The present disclosure provides a terminal device.

The terminal device includes a main unit and a sub unit detachably connected to the main unit. The sub unit includes a display screen, a main circuit board, an auxiliary circuit board, and a piezoelectric ceramic receiver connected to the main circuit board or the auxiliary circuit board. The display screen has a display surface. The main circuit board, the auxiliary circuit board and the piezoelectric ceramic receiver are located on a side of the display screen facing away from the display surface. The piezoelectric ceramic receiver is attached to the display screen. A region surrounded by a continuous hole wall of the main circuit board or the auxiliary circuit board defines an avoiding groove; or the main circuit board or the auxiliary circuit board has a notch provided on an edge thereof, and a region surrounded by the notch defines the avoiding groove. The piezoelectric ceramic receiver is located in the avoiding groove. The avoiding groove surrounds at least a part of the piezoelectric ceramic receiver. An area of the main circuit board is greater than an area of the auxiliary circuit board. The auxiliary circuit board has the avoiding groove provided thereon. The piezoelectric ceramic receiver is connected to the auxiliary circuit board. The sub unit further includes a flexible circuit board connected to the display screen. The flexible circuit board is located between the display screen and the main circuit board. One end of the flexible circuit board extends to a side of the main circuit board facing away from the display screen via a peripheral position of the main circuit board and is connected to the main circuit board.

In the terminal device according to embodiments of the present disclosure, by providing the piezoelectric ceramic receiver on the sub unit, a receiver hole is no longer required to be provided on the display screen, thereby increasing a screen-to-body ratio of the sub unit.

### BRIEF DESCRIPTION OF DRAWINGS

In order to clearly explain technical solutions of the present disclosure, drawings used in description of embodiments are briefly described below. Obviously, the drawings as described below are merely some embodiments of the present disclosure.
FIG. 1 is a schematic diagram illustrating a terminal device in a stacked and combined use state according to Embodiment 1 of the present disclosure.
FIG. 2 is a schematic diagram illustrating the terminal device of FIG. 1 in another stacked and combined use state.
FIG. 3 is a schematic diagram illustrating a terminal device in an edge-on combined use state according to Embodiment 1 of the present disclosure.
FIG. 4 is a schematic diagram illustrating a main unit and a sub unit of the terminal device according to Embodiment 1 of the present disclosure, the main unit and the sub unit being in a separated state.
FIG. 5 is a schematic diagram illustrating a sub unit in the terminal device illustrated in FIG. 1.
FIG. 6 is a schematic diagram illustrating the sub unit illustrated in FIG. 5 with a battery cover removed.
FIG. 7 is an exploded view of an exploded state of the sub unit illustrated in FIG. 7.
FIG. 8 is a structural schematic diagram of a supporting plate in the sub unit illustrated in FIG. 7.
FIG. 9 is another structural schematic diagram of a supporting plate in the sub unit illustrated in FIG. 7.
FIG. 10 is a structural schematic diagram of an avoiding groove in the sub unit illustrated in FIG. 5.
FIG. 11 is a schematic diagram of the terminal device illustrated in FIG. 3 from another angle.
FIG. 12 is a schematic diagram of the terminal device illustrated in FIG. 12 from yet another angle.
FIG. 13 is a schematic diagram illustrating a groove-received bracket of a main unit in the terminal device illustrated in FIG. 12.
FIG. 14 is an exploded view of the main unit and the bracket in the terminal device illustrated in FIG. 13.
FIG. 15 is a partial schematic diagram illustrating a part XV of the bracket in the terminal device illustrated in FIG. 14.
FIG. 16 is a schematic diagram illustrating a bracket and a main unit in the terminal device illustrated in FIG. 12 forming a second angle.
FIG. 17 is a schematic diagram of a terminal device according to Embodiment 2 of the present disclosure.

### DESCRIPTION OF EMBODIMENTS

Technical solutions of embodiments of the present disclosure will be clearly and thoroughly described below in combination with accompanying drawings of the embodiments of the present disclosure.

In order to clearly explain the above objectives, features and advantages of the present disclosure, the present disclosure will be described in detail below with reference to the accompanying drawings and specific implementations. It is to be noted that the embodiments of the present disclosure and features in the embodiments can be combined with each other unless they are conflicting.

In the following description, specific details are set forth in order to facilitate full understanding of the present disclosure. Implementations described below are only a part of, rather than all of the implementations of the present disclosure.

The technical solutions according to the embodiments of the present disclosure will be clearly and completely described below in combination with the accompanying drawings of the embodiments of the present disclosure. Obviously, embodiments described below are only a part of, rather than all of the embodiments of the present disclosure.

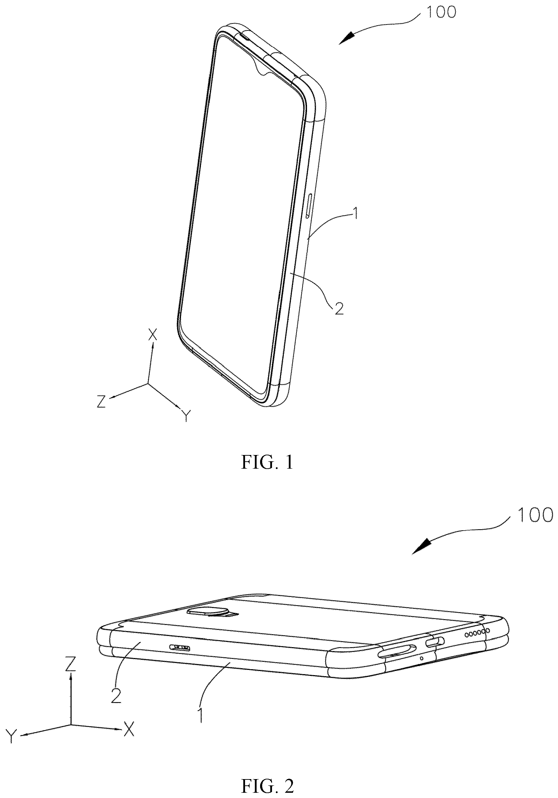

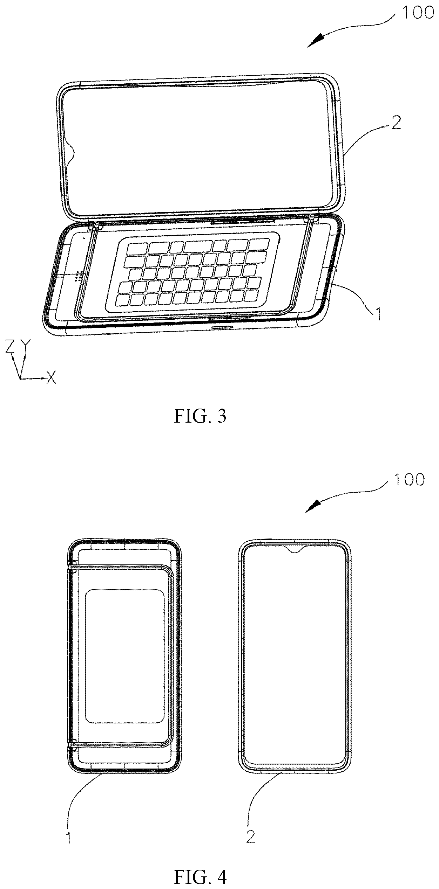

FIG. 1 to FIG. 4 illustrates a terminal device 100 according to Embodiment 1 of the present disclosure. Referring to FIG. 1 to FIG. 4, the terminal device 100 includes a main unit 1, and a sub unit 2 detachably connected to the main unit 1. The main unit 1 and the sub unit 2 can be communicatively connected to each other. That is, the main unit 1 and the sub unit 2 can be in communication with each other. The main unit 1 and the sub unit 2 can be used in combination or separately. For example, as illustrated in FIG. 1 and FIG. 2, the sub unit 2 may be stacked on the main unit 1, allowing the terminal device 100 to be in a stacked and combined use state. When the terminal device 100 is in the stacked and combined use state, the sub unit 2 can be charged on the main unit 1. Correspondingly, a wireless electric ring may be provided on the main unit 1, such that the sub unit 2 can be charged as long as the sub unit 2 is placed on the main unit 1. In at least one embodiment, contacts that are electrically connected can be provided on the main unit 1, and contacts that are electrically connected can also be provided on the sub unit 2, accordingly. The contacts on the sub unit 2 and the contacts on the main unit 1 may contact with each other for charging or data transmission. A sub unit display 21 of the sub unit 2 may, as illustrated in FIG. 1, face towards the main unit 1, or as illustrated in FIG. 2, face away from the main unit 1. For example, as illustrated in FIG. 3, the sub unit 2 may be placed on the main unit 1 on its edge, such that the terminal device 100 may be in an edge-on combined use state. In the edge-on combined use state, a control instruction may be input through an input device, such as a keyboard, on the main unit 1. The sub unit display 21 of the sub unit 2 displays a display content corresponding to the control instruction. For example, as illustrated in FIG. 4, the sub unit 2 may be used separately from the main unit 1. The sub unit 2 may be used independently from the main unit 1. When the sub unit 2 is used separately from the main unit 1, the sub unit 2 may be provided with modules such as a receiver and a transmitter to implement application scenarios such as an independent call.

It can be understood that a length direction of the main unit 10 in the terminal device 100 is a direction X, a width direction of the main unit 1 in the terminal device 100 is a direction Y, and a thickness direction of the main unit 1 in the terminal device 100 is a direction Z.

It can be understood that when the terminal device 100 is in any of the above use states, the main unit 1 and the sub unit 2 may be communicatively connected to each other. That is, the main unit 1 and the sub unit 2 can be in communication with each other

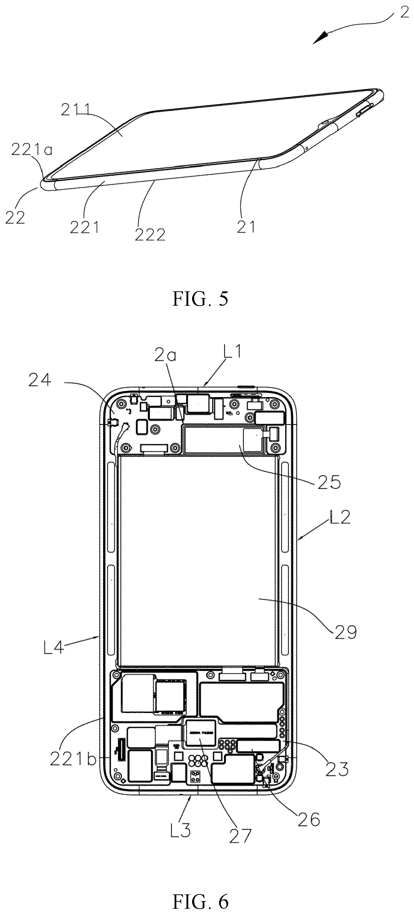

In this embodiment, referring to FIG. 5 to FIG. 6, the sub unit 2 includes a display screen 21, a main circuit board 23, an auxiliary circuit board 24, a piezoelectric ceramic receiver 25 connected to the main circuit board 23 or the auxiliary circuit board 24. The display screen 21 has a display surface 211. The main circuit board 23, the auxiliary circuit board 24 and the piezoelectric ceramic receiver 25 are located on a side of the display screen 21 facing away from the display surface 211. The piezoelectric ceramic receiver 25 is attached to the display screen 21. A region surrounded by a continuous hole wall of the main circuit board 23 or the auxiliary circuit board 24 defines an avoiding groove 2a; or the main circuit board 23 or the auxiliary circuit board 24 has a notch provided on an edge thereof, and a region surrounded by the notch defines the avoiding groove 2a. The piezoelectric ceramic receiver 25 is located in the avoiding groove 2a. The avoiding groove 2a surrounds at least a part of the piezoelectric ceramic receiver 25.

In the terminal device 100 according to embodiments of the present disclosure, by providing the piezoelectric ceramic receiver 25 on the sub unit 2, a receiver hole is no longer required to be defined on the display screen 21, thereby increasing a screen-to-body ratio of the sub unit 2.

In an embodiment, the sub unit 2 includes a housing 22 and the display screen 21. The housing 22 includes a middle frame 221 and a battery cover 222. The middle frame 221 has a first surface 221a and a second surface 221b that are opposite to each other. The display screen 21 is connected to the first surface 221a. The battery cover 222 is connected to the second surface 221b. In other words, the middle frame 221 is located between the display screen 21 and the battery cover 222. The middle frame 221 has a first side plate L1, a second side plate L2, a third side plate L3, and a fourth side plate L4 that are adjacent to each other in sequence. The first side plate L1 and the third side plate L3 are shorter side plates in the middle frame 221, and the second side plate L2 and the fourth side plate L4 are longer side plates in the middle frame 221. Edges of the four side plates can be connected to edges of the display screen 21 to protect the display screen 21, thereby improving reliability of the sub unit 2 in use.

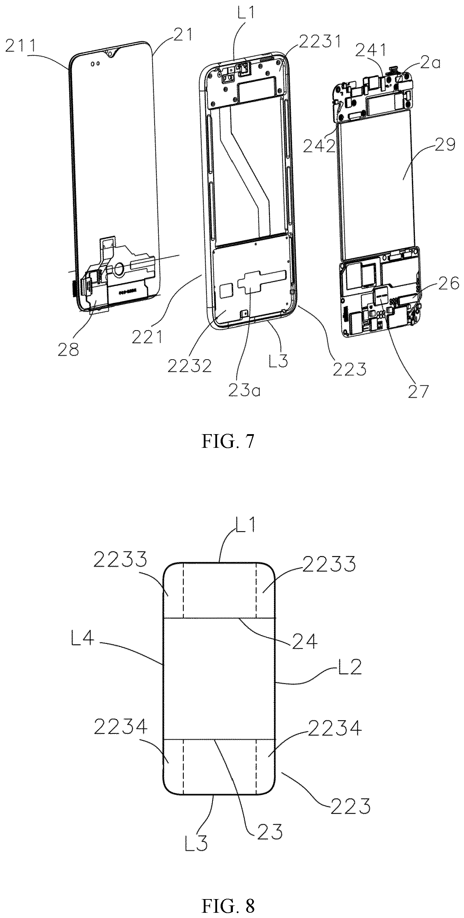

Referring to FIG. 7, it can be understood that a supporting plate 223 is formed inside the middle frame 221. The supporting plate 223 may form a mounting structure such as a fixed stud configured to fix components of the sub unit 2 in the middle frame 221.

A structure of the supporting plate 223 includes, but is not limited to, the following embodiments.

In an embodiment, as illustrated in FIG. 7, the supporting plate 223 includes a first sub-plate 2231 and a second sub-plate 2232 that are spaced apart from each other. The first sub-plate 2231 extends from an inner side of the first side plate L1 towards the third side plate L3. The second sub-plate 2232 extends from an inner side of the third side plate L3 towards the first side plate L1. The first sub-plate 2231 and the second sub-plate 2232 are spaced apart from each other to define a space for accommodating the battery 29. The first sub-plate 2231 can be connected to the auxiliary circuit board 24 through screws to fix the auxiliary circuit board 24 in the middle frame 221. The second sub-plate 2232 can be connected to the main circuit board 23 through screws to fix the main circuit board 23 in the middle frame 221. Such a structure of the supporting plate 223 increases a connection area with the main circuit board 23 or the auxiliary circuit board 24, such that the main circuit board 23 and the auxiliary circuit board 24 can be arranged in the sub unit 2 stably.

In another embodiment, as illustrated in FIG. 8, the supporting plate 223 includes a first group of sub-plates 2233 and a second group of sub-plates 2234 that are spaced apart from each other. The first group of sub-plates 2233 includes two sub-plates. The two sub-plates are respectively disposed on the second side plate L2 and the fourth side plate L4, and are close to the first side plate L1. The two sub-plates of the first group of sub-plates 2233 are spaced apart from each other. The auxiliary circuit board 24 is fixed to the first group of sub-plates 2233. The second group of sub-plates also includes two sub-plates. The two sub-plates are respectively disposed on the second side plate L2 and the fourth side plate L4, and are close to the second side plate L2. The two sub-plates of the second group of sub-plates 2234 are spaced apart from each other. The main circuit board 23 is fixed to the second group of sub-plates 2234. The first group of sub-plates 2233 and the second group of sub-plates 2234 are spaced apart from each other to define a space for accommodating the battery 29. Such a structure of the supporting plate 223 reduces the weight of the sub unit 2.

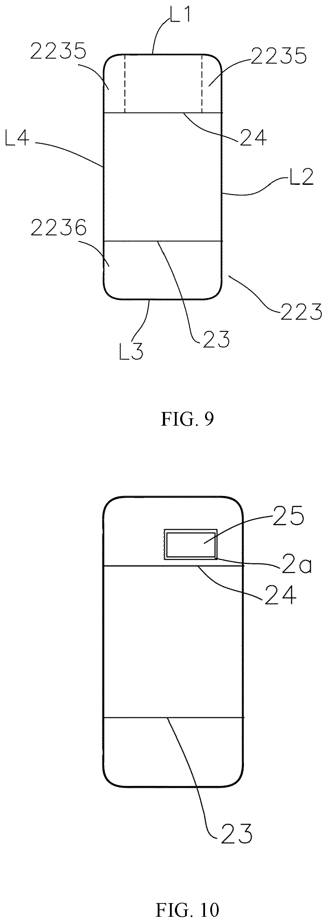

In yet another embodiment, as illustrated in FIG. 9, the supporting plate 223 includes a third group of sub-plates 2235 and a third sub-plate 2236. The third group of sub-plates 2235 includes two sub-plates. The two sub-plates of the third group of sub-plates 2235 are respectively disposed on the second side plate L2 and the fourth side plate L4, and are close to the first side plate L1. The two sub-plates of the third group of sub-plates 2235 are spaced apart from each other. The auxiliary circuit board 24 is fixed to the third group of sub-plates 2235. The third sub-plate 2236 is disposed on the third side plate L3. The third sub-plate 2236 extends towards the first side plate L1. The second sub-plate 2232 can be connected to the main circuit board 23 through screws to fix the main circuit board 23 to the middle frame 221. The third sub-plate 2236 and the third group of sub-plates 2235 are spaced apart from each other to define a space for accommodating the battery 29. The third group of sub-plates 2235 is fixed to the auxiliary circuit board 24. A size of the auxiliary circuit board 24 is smaller than that of the main circuit board. A hollow structure in the middle of the third group of sub-plates 2235 can not only ensure a stable arrangement of the auxiliary circuit board 24 in the sub unit 2, but also reduce the weight of the third group of sub-plates 2235. Since the size of the main circuit board 23 is relatively large, the third sub-plate 2236 is provided to increase a connection area between the main circuit board 23 and the third sub-plate 2236, such that the main circuit board 23 can be stably placed in the sub unit 2.

In this embodiment, as illustrated in FIG. 6 and FIG. 7, an area of the main circuit board 23 is greater than an area of the auxiliary circuit board 24, and the main circuit board 23 is mainly provided with a sub unit main controller 26 and a fingerprint recognition module 27. When a user needs to activate the display screen 21 to display an image, the sub unit main controller 26 controls the display screen 21 to display the image. When the user needs to activate the fingerprint recognition module 27 to recognize a fingerprint, the sub unit main controller 26 controls the fingerprint recognition module 27 to recognize the fingerprint. In addition, when the sub unit main controller 26 and the fingerprint recognition module 27 are both provided on the main circuit board 23, a connection line between the fingerprint recognition module 27 and the sub unit controller is the shortest. Consequently, the fingerprint recognition module 27 transmits data faster, increasing the sensitivity of the fingerprint recognition module 27. Of course, in other embodiments, the fingerprint recognition module 27 can also be provided on the auxiliary circuit board 24.

The main circuit board 23 is fixed to the supporting plate 223 of the middle frame 221. In other words, the supporting plate 223 is provided between the main circuit board 23 and the display screen 21. The main circuit board 23 is electrically connected to the display screen 21 to display images. It can be understood that a flexible circuit board 28 is connected between the main circuit board 23 and the display screen 21. When the user needs to activate the display screen 21 to display electronic images, the sub unit main controller 26 controls a screen body to display images through the main circuit board 23 and the flexible circuit board 28. The flexible circuit board 28 is located between the display screen 21 and the main circuit board 23. The flexible circuit board 28 is located between the display screen 21 and the supporting plate 223. One end of the flexible circuit board 28 extends to a side of the main circuit board 23 facing away from the display screen 21 via a peripheral position of the main circuit board 23 and is connected to the main circuit board 23. By arranging a part of the flexible circuit board 28 on a peripheral side of the main circuit board 23, the peripheral position of the main circuit board 23 is effectively utilized, thereby improving a space utilization rate of the sub unit 2.

It can be understood that the sub unit 2 includes the fingerprint recognition module 27. A through hole 23a is defined in the main circuit board 23. At least a part of the fingerprint recognition module 27 is located in the through hole 23a of the main circuit board 23. A recognition surface of the fingerprint recognition module 27 faces the display screen 21. In this embodiment, a first through hole 23a is defined on the main circuit board 23 of the terminal device 100, and all or a part of the fingerprint recognition module 27 is located in the first through hole 23a, such that components inside the terminal device 100 are arranged compactly, and the space utilization rate is high. In addition, since an internal arrangement of the terminal device 100 is relatively compact, more other electronic components can be arranged in an internal space of the terminal device 100, thereby diversifying the functions of the terminal device 100. Furthermore, the fingerprint recognition module 27 is entirely or partially disposed in the first through hole 23a, so as to reduce a thickness of the terminal device 100 in a direction perpendicular to a light-emitting surface 11, thereby achieving a thinner configuration of the terminal device 100.

The auxiliary circuit board 24 can be configured to electrically connect a camera and a structured light module. It can be understood that the piezoelectric ceramic receiver 25 can also be provided on the auxiliary circuit board 24. By arranging the piezoelectric ceramic receiver 25 on the auxiliary circuit board 24 close to the first side plate L1, the user can hear the sound at the top of the sub unit 2. Correspondingly, a position of the supporting plate 223 directly facing the piezoelectric ceramic receiver 25 is a hollow portion, such that the piezoelectric ceramic receiver 25 can be attached to the display screen 21. For example, when the user is in a call scenario, the user may put the display screen 21 of the sub unit 2 close to his/her ear, the piezoelectric ceramic receiver 25 converts the electrical signal into a corresponding acoustic signal and transmits the corresponding acoustic signal to the user's ear to achieve functions of receiving calls. By providing the piezoelectric ceramic receiver 25 of this structure on the sub unit 2, a receiver hole on the display screen 21 can be omitted, and an area of a non-display region of the display screen 21 can be reduced, thereby improving the screen-to-body ratio of the sub unit 2. Of course, in other embodiments, the avoiding groove is defined in the main circuit board, and the piezoelectric ceramic receiver is connected to the main circuit board. The supporting plate and the piezoelectric ceramic receiver are arranged in the same way as the supporting plate 223 and the piezoelectric ceramic receiver 25 described in the above embodiments, and the main circuit board and the piezoelectric ceramic receiver are arranged in the same way as the auxiliary circuit board 24 and the piezoelectric ceramic receiver 25 described in the above embodiments, which are not repeated herein.

The piezoelectric ceramic receiver 25 is electrically connected to the auxiliary circuit board 24 through an electrical connector. An arrangement of the piezoelectric ceramic receiver 25 on the auxiliary circuit board 24 includes, but is not limited to, the following embodiments.

In an embodiment, the auxiliary circuit board 24 has a notch provided on an edge thereof. A region surrounded by the notch defines the avoiding groove 2a. The piezoelectric ceramic receiver 25 is located in the avoiding groove 2a, and the avoiding groove 2a surrounds at least a part of the piezoelectric ceramic receiver 25. Specifically, the auxiliary circuit board 24 has a first side edge 241 and a second side edge 242 that are opposite to each other along a length extension direction of the second side plate L2. The first side edge 241 is close to the first side plate L1. The second side edge 242 is away from the second side plate L2. The second side edge 242 is provided with a notch. A size of a region surrounded by the notch matches a size of the piezoelectric ceramic receiver 25. The auxiliary circuit board 24 surrounds a half of the piezoelectric ceramic receiver 25. In other words, other components, such as the battery 29, may be arranged adjacent to the auxiliary circuit board 24. An edge of the battery 29 close to the second side edge 242 may seal the notch on the second side edge 242. In other words, the piezoelectric ceramic receiver 25 is located between the auxiliary circuit board 24 and the battery 29. The arrangement of the piezoelectric ceramic receiver 25 on the auxiliary circuit board 24 is relatively compact, optimizing an arrangement of the sub unit 2.

In another embodiment, as illustrated in FIG. 10, a region surrounded by a continuous hole wall on the auxiliary circuit board 24 defines the avoiding groove 2a. Specifically, the auxiliary circuit board 24 defines a first hole, i.e., the avoiding groove 2a. The first hole has a continuous hole wall. The piezoelectric ceramic receiver 25 is located in the first hole. The piezoelectric ceramic receiver 25 is arranged on the auxiliary circuit board 24 in such a manner that the piezoelectric ceramic receiver 25 is completely enclosed by the hole wall of the auxiliary circuit board 24. In this way, the piezoelectric ceramic receiver 25 is confined in the first hole, which facilitates fixation of the piezoelectric ceramic receiver 25 to the sub unit 2.

It can be understood that elastic foam can also be provided between the piezoelectric ceramic receiver 25 and the hole wall. By arranging the foam between the piezoelectric ceramic receiver 25 and the hole wall, a rigid collision between the piezoelectric ceramic receiver 25 and the hole wall can be avoided when the sub unit 2 falls, thereby further improving the reliability of the sub unit 2 in use.

Further, as illustrated in FIG. 6 and FIG. 7, the terminal device 100 further includes the battery 29. The battery 29 and the auxiliary circuit board 24 are located on the side of the display screen 21 facing away from the display surface 211. The main circuit board 23, the battery 29, and the auxiliary circuit board 24 are arranged in sequence in a length direction of the sub unit 2. A length of the main circuit board 23 in the length direction of the sub unit 2 is greater than a length of the flexible circuit board 28 in the length direction of the sub unit 2. A length of the auxiliary circuit board 24 in the length direction of the sub unit 2 is smaller than the length of the flexible circuit board 28 in the length direction of the sub unit 2. Specifically, the battery 29 is located between the auxiliary circuit board 24 and the main circuit board 23. Compared with that the flexible circuit board cannot be placed between the auxiliary circuit board 24 and the display screen 21 (the length of the flexible circuit board 28 is greater than the length of the auxiliary circuit board 24, and the main circuit board 23, the battery 29 and the auxiliary circuit board 24 are arranged in sequence in a length direction of sub unit 2, that is, in a direction of the second side plate L2, the length of the sub unit 2 includes the length of the flexible circuit board 28, a length of the battery 29, and the length of the main circuit board 23), by arranging the main circuit board 23 between the display screen 21 and the main circuit board 23 according to this embodiment significantly, the length of the sub unit 2 according to this embodiment can be significantly reduced (since the length of the flexible circuit board 28 is smaller than the length of the main circuit board 23, and the main circuit board 23, the battery 29 and the auxiliary circuit board 24 are arranged in sequence in the length direction of the sub unit 2, the length of the sub unit 2 includes the length of the main circuit board 23, the length of the battery 29, and the length of the auxiliary circuit board 24). Consequently, in this embodiment, the length of the battery 29 can be increased accordingly to ensure that an overall length of the sub unit 2 will not decrease. Therefore, when the length of the battery 29 increases, the battery 29 has a greater capacity, which in turn provides the sub unit 2 with a longer use time.

In addition, when the length of the main circuit board 23 in the length direction of the sub unit 2 is greater than the length of the auxiliary circuit board 24 in the length direction of the sub unit 2, more functional components, such as a flash memory chip or a microphone, may be arranged on the main circuit board 23. In this case, connection lines between these functional components and the sub unit main controller 2624 are the shortest, thereby increasing the sensitivity of the functional components.

In this embodiment, a thickness of the sub unit 2 in a direction perpendicular to the display surface 211 is greater than or equal to 3mm and smaller than or equal to 4mm. When the sub unit 2 is detachably mounted on the main unit 1, a maximum thickness of the sub unit 2 and the main unit 1 in the direction perpendicular to the display surface 211 is greater than or equal to 9mm and smaller than or equal to 13mm. In this case, the thickness of the sub unit 2 in the direction perpendicular to the display surface 211 is significantly smaller than that of a conventional terminal device, so as to ensure that the sub unit 2 is thinner and lighter.

In the terminal device 100 according to embodiments of the present disclosure, by providing the piezoelectric ceramic receiver 25 on the sub unit 2, the display screen 21 is no longer required to be provided with the receiver hole, thereby increasing the screen-to-body ratio of the sub unit 2.

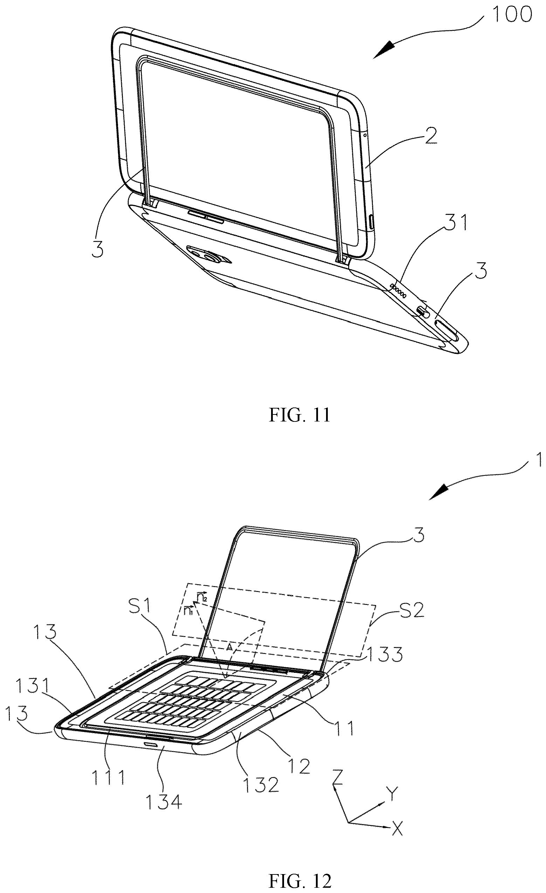

In an embodiment, referring to FIG. 11 and FIG. 12, the main unit 1 has a first surface 11. The first surface 11 is recessed to define a groove 111. The bracket 3 is rotatable relative to the first surface 11 of the main unit 1 to be rotated into or rotated out of the groove 111. When the bracket 3 is deployed at a first angle A relative to the first surface 11 of the main unit 1, the sub unit 2 is attached to the bracket 3.

Specifically, a size of the sub unit 2 is the same as a size of the main unit 1.

By providing the bracket 3 on the main unit 1, the sub unit 2 can be attached to the bracket 3, such that the terminal device can be used in an edge-on state.

Specifically, the main unit 1 is roughly in a rectangular shape. The main unit 1 has the first surface 11 and the second surface 12 that are opposite to each other, and a peripheral side surface 13 enclosed between the first surface 11 and the second surface 12. The peripheral side surface 13 includes four side surfaces adjacent to each other in sequence, which are a first side surface 131, a third side surface 133, a second side surface 132, and a fourth side surface 134. The third side surface 132 and the fourth side surface 134 are longer side surfaces of the main unit 1, and the first side surface 131 and the second side surface 132 are shorter side surfaces of the main unit 1. For ease of description, an extension direction of one longer side surface of the main unit 1 is defined as the direction X, an extension direction of one shorter side surface of the main unit 1 is defined as the direction Y, and a distance between the first surface 11 and the second surface 12 on the main unit 1 is defined as the direction Z.

The first surface 11 is a curved surface with a curvature. In other embodiments, the first surface 11 may also be a flat plane.

The first surface 11 is recessed to define the groove 111. The groove 111 mainly provides space for accommodating the bracket 3. In other words, a shape of the groove 111 corresponds to a shape of the bracket 3.

The bracket 3 is rotatable with respect to the first surface 11 of the main unit 1 to be rotated into or out of the groove 111. When the bracket 3 is deployed at the first angle A relative to the first surface 11 of the main unit 1, the sub unit 2 is attached to the bracket 3. Specifically, the bracket 3 can be rotatable relative to the main unit 1. Using the main unit 1 as a reference, the bracket 3 can be turned at a certain angle relative to the main unit 1. The bracket 3 is deployed at the first angle A relative to the first surface 11 of the main unit 1. If the first surface 11 is a curved surface, a supplementary angle of an included angle between a normal vector *̅n̅*̅1̅ of a plane portion S 1 of the first surface 11 and a normal vector *̅n̅*̅2̅ of a plane portion S2 of the bracket 3 is the first angle A. In at least one embodiment, when the main unit 1 is placed on a flat surface, a supplementary angle of an included angle between a normal vector *̅n̅*̅1̅ of a portion S 1 of the first surface 11 parallel to the flat surface and the normal vector *̅n̅*̅2̅ of the plane portion S2 of the bracket 3 may also be the first angle A.

In at least one embodiment, the first angle A ranges from 120° to 165°. In this manner, when the user is watching a video or viewing a picture, the user's eyes directly face the sub unit display 21 of the sub unit 2, so as to ensure that the user can watch the video or view the picture in the most comfortable posture, thereby improving the use experience of the terminal device of the user.

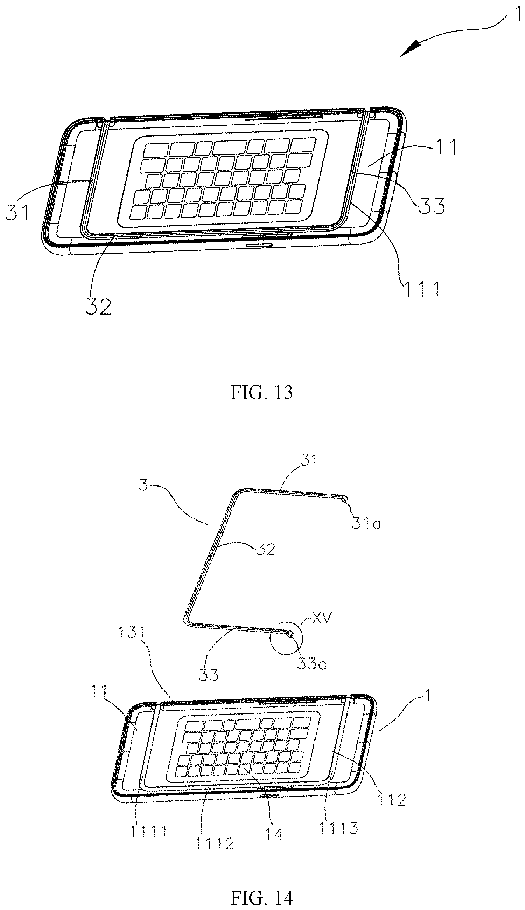

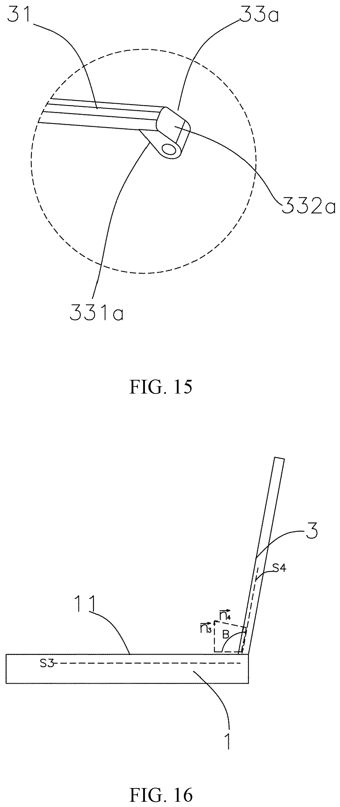

Referring to FIG. 13 to FIG. 16, it can be understood that the bracket 3 has a first arm 31, a second arm 32, and a third arm 33 that are connected in sequence. The first arm 31 and the second arm 32 are opposite to each other and located on the same side of the second arm 32. An end portion of the first arm 31 forms a first rotating portion 31a, and an end portion of the third arm 33 forms a second rotating portion 33a. The first rotating portion 31a and the second rotating portion 33a are rotatably connected to the main unit 1, respectively. Specifically, the groove 111 includes a first groove section 1111, a second groove section 1112, and a third groove section 1113 that are connected to each other in sequence. As illustrated in FIG. 8, when the bracket 3 is located in the groove 111, the first arm 31 is located in the first groove section 1111, the second arm 32 is located in the second groove section 1112, and the third arm 33 is located in the third groove section 1113. In other words, the shape of the groove 111 is the same as the shape of the bracket 3, and is approximately a U-shaped. The groove 111 in such a shape can reduce the space occupied by the first surface 11 and can accommodate the bracket 3 at the same time. In other words, the groove 111 of this shape enables other components to be arranged on the first surface 11. As illustrated in FIG. 9, the end portions of both the first groove section 1111 and the third groove section 1113 are open ends. In other words, the end portions, facing away from the second groove section 1112, of the first groove section 1111 and the third groove section 1113 penetrate the third side surface 133. The first rotating portion 31a of the first arm 31 and a third rotating portion of the third arm 33 are located at the end portion of the first groove section 1111 and the end portion of the third groove section 1113, respectively. As illustrated in FIG. 10, the first rotating portion 31a and the second rotating portion 33a have the same structure. Taking the structure of the first rotating portion 31a as an example, the first rotating portion 31a has a first rotating surface 331a and a second rotating surface 332a that are opposite to each other, the first rotating surface 331a is inclined relative to the first arm 31, and the second rotating surface 332a is inclined relative to the first arm 31. In other words, the first rotating surface 331a and the second rotating surface 332a are both inclined surfaces, such that the bracket 3 can be deployed at a large angle relative to the main unit 1. In other words, when the bracket 3 is rotated to a place where the second rotating surface 332a of the first rotating portion 31a is attached to a bottom surface of the first groove section 1111, the bracket 3 can be fixed relative to the main unit 1, as the bottom surface of the first groove section 1111 abuts against the second rotating surface 332a of the first rotating portion 31a. A structural arrangement of the first rotating portion 31a allows the bracket 3 to be deployed at a certain angle relative to the main unit 1 and fixed relative to the main unit 1 without requiring a locking member provided between the bracket 3 and the main unit 1. Of course, in other embodiments, a limiting protrusion 161 may be further provided between the first rotating portion 31a and the main unit 1, so as to realize that the bracket 3 is fixed relative to the main unit 1 after being unfolded at a certain angle.

When the bracket 3 is deployed at a certain angle relative to the main unit 1, the sub unit 2 can be attached to the bracket 3. It can be understood that, when the sub unit 2 is attached to the bracket 3, the border of the sub unit 2 can be flush with a border of the bracket 3. Specifically, an area of an outer peripheral surface of the sub unit 2 is the same as an area of an outer peripheral surface of the bracket 3, such that the border of the sub unit 2 can be flush with the border of the bracket 3 after the sub unit 2 is attached to the bracket 3. Of course, in other embodiments, the size of the sub unit 2 can also be greater than a size of the bracket 3.

In the terminal device 100 according to the embodiments of the present disclosure, by providing the piezoelectric ceramic receiver 25 on the sub unit 2, the receiver hole is no longer required to be provided in the display screen 21, thereby increasing the screen-to-body ratio of the sub unit 2.

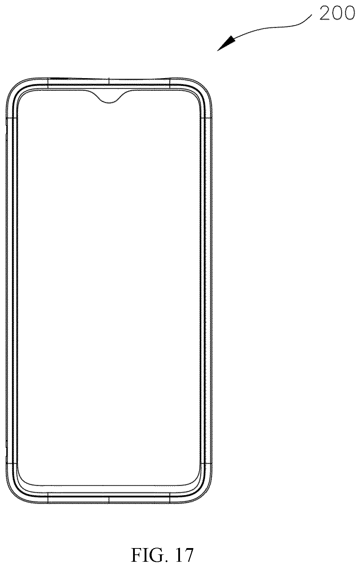

FIG. 17 illustrates a terminal device 200 according to Embodiment 2 of the present disclosure. Referring to FIG. 17, the terminal device 200 according to Embodiment 2 has roughly the same structure as the terminal device 100 according to Embodiment 1 of the present disclosure. The terminal device 200 differs from the terminal device 100 mainly in that the terminal device 200 includes a display screen, a main circuit board, an auxiliary circuit board, and a piezoelectric ceramic receiver connected to the main circuit board or the auxiliary circuit board. The display screen has a display surface. The main circuit board, the auxiliary circuit board, and the piezoelectric ceramic receiver are located on a side of the display screen facing away from the display surface. The piezoelectric ceramic receiver is attached to the display screen. An avoiding groove is defined on the main circuit board or the auxiliary circuit board. The piezoelectric ceramic receiver is located in the avoiding groove. The avoiding groove surrounds at least a part of the piezoelectric ceramic receiver. It can be understood that an area of the main circuit board is greater than an area of the auxiliary circuit board, the avoiding groove is defined on the auxiliary circuit board, and the piezoelectric ceramic receiver is connected to the auxiliary circuit board. The terminal device further includes a flexible circuit board connected to the display screen. The flexible circuit board is located between the display screen and the main circuit board. One end of the flexible circuit board extends to a side of the main circuit board facing away from the display screen via a peripheral position of the main circuit board, and is connected to the main circuit board. The terminal device 200 of the present disclosure is an integrated terminal. The piezoelectric ceramic receiver is arranged on the main circuit board or the auxiliary circuit board in the same way as that described in Embodiment 1, which is not repeated herein.

It can be understood that the terminal device 200 further includes a battery. The battery and the auxiliary circuit board are located on the side of the display screen facing away from the display surface. The main circuit board, the battery, and the auxiliary circuit board are arranged in sequence in a length direction of the terminal device. A length of the main circuit board in the length direction of the terminal device is greater than a length of the flexible circuit board in the length direction of the terminal device. A length of the auxiliary circuit board in the length direction of the terminal device is smaller than the length of the flexible circuit board in the length direction of the terminal device.

The auxiliary circuit board, the battery, the main circuit board, and the flexible circuit board are arranged in the same manners as those described in Embodiment 1, which is not repeated herein.

It can be understood that a thickness of the terminal device 200 is greater than or equal to 3mm and smaller than or equal to 4mm.

The above are some embodiments of the present disclosure. It should be pointed out that those skilled in the art can make several improvements and modifications without departing from principles of the present disclosure.

## Claims

1. A terminal device (100), comprising:
a main unit (1); and
a sub unit (2) detachably connected to the main unit (1), the sub unit (2) comprising:
a display screen (21);
a main circuit board (23);
an auxiliary circuit board (24); and
a piezoelectric ceramic receiver (25) connected to the main circuit board (23) or the auxiliary circuit board (24),
wherein the display screen (21) has a display surface (211), the main circuit board (23), the auxiliary circuit board (24) and the piezoelectric ceramic receiver (25) are located on a side of the display screen (21) facing away from the display surface (211), **characterized in that**, the piezoelectric ceramic receiver (25) is attached to the display screen (21),
a region surrounded by a continuous hole wall of the main circuit board (23) or the auxiliary circuit board (24) defines an avoiding groove (2a); or the main circuit board (23) or the auxiliary circuit board (24) has a notch provided on an edge thereof, and a region surrounded by the notch defines the avoiding groove (2a), and
the piezoelectric ceramic receiver (25) is located in the avoiding groove (2a), and the avoiding groove (2a) surrounds at least a part of the piezoelectric ceramic receiver (25),
wherein an area of the main circuit board (23) is greater than an area of the auxiliary circuit board (24), the auxiliary circuit board (24) has the avoiding groove (2a) provided thereon, and the piezoelectric ceramic receiver (25) is connected to the auxiliary circuit board (24); and the sub unit (2) further comprises a flexible circuit board (28) connected to the display screen (21), the flexible circuit board (28) is located between the display screen (21) and the main circuit board (23), and one end of the flexible circuit board (28) extends to a side of the main circuit board (23) facing away from the display screen (21) via a peripheral position of the main circuit board (23) and is connected to the main circuit board (23).

2. The terminal device (100) according to claim 1, further comprising a battery (29), wherein the battery (29) and the auxiliary circuit board (24) are located on the side of the display screen (21) facing away from the display surface (211), the main circuit board (23), the battery (29) and the auxiliary circuit board (24) are arranged in sequence in a length direction of the sub unit (2), a length of the main circuit board (23) in the length direction of the sub unit (2) is greater than a length of the flexible circuit board (28) in the length direction of the sub unit (2), and a length of the auxiliary circuit board (24) in the length direction of the sub unit (2) is smaller than the length of the flexible circuit board (28) in the length direction of the sub unit (2).

3. The terminal device (100) according to claim 1, wherein an area of the main circuit board (23) is greater than an area of the auxiliary circuit board (24), the main circuit board (23) has the avoiding groove (2a) provided thereon, and the piezoelectric ceramic receiver (25) is connected to the main circuit board (23).

4. The terminal device (100) according to claim 1, wherein a thickness of the sub unit (2) is greater than or equal to 3mm and smaller than or equal to 4mm; and when the sub unit (2) is detachably connected to the main unit (1), a maximum thickness of the terminal device (100) is greater than or equal to 7mm and smaller than or equal to 10mm.

5. The terminal device (100) according to any one of claims 1 to 3, wherein the sub unit (2) further comprises a fingerprint recognition module, the main circuit board (23) defines a through hole (23a), at least a part of the fingerprint recognition module is located in the through hole (23a) of the main circuit board (23), and a recognition surface of the fingerprint recognition module faces the display screen (21).

6. The terminal device (100) according to any one of claims 1 to 3, wherein the sub unit (2) further comprises a housing (22), the housing (22) comprises a middle frame (221) and a battery cover (222), the middle frame (221) has a first surface (221a) and a second surface (221b) that are opposite to each other, the display screen (21) is connected to the first surface (221a), and the battery cover (222) is connected to the second surface (221b); and a supporting plate (223) is formed inside the middle frame (221), and the supporting plate (223) fixes a component in the middle frame (221).

7. The terminal device (100) according to claim 6, wherein the supporting plate (223) comprises a first sub-plate (2231) and a second sub-plate (2232) that are spaced apart from each other; the first sub-plate (2231) and the second sub-plate (2232) are spaced apart from each other to define a space for accommodating the battery (29); and the first sub-plate (2231) is fixed to the auxiliary circuit board (24), and the second sub-plate (2232) is fixed to the main circuit board (23).

8. The terminal device (100) according to claim 6, wherein the supporting plate (223) comprises a first group of sub-plates (2233) and a second group of sub-plates (2234) that are spaced apart from each other, the first group of sub-plates (2233) comprises two sub-plates, and the auxiliary circuit board (24) is fixed to the first group of sub-plates (2233); and the second group of sub-plates (2234) comprises two sub-plates, and the main circuit board (23) is fixed to the second group of sub-plates (2234).

9. The terminal device (100) according to claim 6, wherein the supporting plate (223) comprises a third group of sub-plates (2235) and a third sub-plate (2236), the third group of sub-plates (2235) comprises two sub-plates, the two sub-plates of the third group of sub-plates (2235) are spaced apart from each other, and the auxiliary circuit board (24) is fixed to the third group of sub-plates (2235); and the third sub-plate (2236) is fixed to the main circuit board (23).

## Patentansprüche

1. Endgerätvorrichtung (100), umfassend:
eine Haupteinheit (1); und
eine Untereinheit (2), die abnehmbar mit der Haupteinheit (1) verbunden ist, wobei die Untereinheit (2) Folgendes umfasst:
einen Anzeigebildschirm (21);
eine Hauptschaltungsplatine (23);
eine Hilfsschaltungsplatine (24); und
einen piezoelektrischen Keramikempfänger (25), der mit der Hauptschaltungsplatine (23) oder der Hilfsschaltungsplatine (24) verbunden ist,
wobei der Anzeigebildschirm (21) eine Anzeigefläche (211) aufweist, wobei sich die Hauptschaltungsplatine (23), die Hilfsschaltungsplatine (24) und der piezoelektrische Keramikempfänger (25) auf einer von der Anzeigefläche (211) abgewandten Seite des Anzeigebildschirms (21) befinden, **dadurch gekennzeichnet, dass** der piezoelektrische Keramikempfänger (25) an dem Anzeigebildschirm (21) angebracht ist,
wobei eine von einer durchgehenden Öffnungswand der Hauptschaltungsplatine (23) oder der Hilfsschaltungsplatine (24) umgebene Region eine Ausweichnut (2a) definiert; oder die Hauptschaltungsplatine (23) oder die Hilfsschaltungsplatine (24) eine Einkerbung aufweist, die an einer Kante davon bereitgestellt ist, und eine von der Einkerbung umgebene Region die Ausweichnut (2a) definiert, und
wobei sich der piezoelektrische Keramikempfänger (25) in der Ausweichnut (2a) befindet, und die Ausweichnut (2a) zumindest einen Teil des piezoelektrischen Keramikempfängers (25) umgibt,
wobei ein Bereich der Hauptschaltungsplatine (23) größer als ein Bereich der Hilfsschaltungsplatine (24) ist, wobei die Hilfsschaltungsplatine (24) die daran bereitgestellte Ausweichnut (2a) aufweist, und der piezoelektrische Keramikempfänger (25) mit der Hilfsschaltungsplatine (24) verbunden ist; und die Untereinheit (2) ferner eine flexible Schaltungsplatine (28) aufweist, die mit dem Anzeigebildschirm (21) verbunden ist, wobei sich die flexible Schaltungsplatine (28) zwischen dem Anzeigebildschirm (21) und der Hauptschaltungsplatine (23) befindet, und sich ein Ende der flexiblen Schaltungsplatine (28) über eine Umfangsposition der Hauptschaltungsplatine (23) zu einer dem Anzeigebildschirm (21) abgewandten Seite der Hauptschaltungsplatine (23) erstreckt und mit der Hauptschaltungsplatine (23) verbunden ist.

2. Endgerätvorrichtung (100) nach Anspruch 1, ferner umfassend eine Batterie (29), wobei sich die Batterie (29) und die Hilfsschaltungsplatine (24) auf der der Anzeigefläche (211) abgewandten Seite des Anzeigebildschirms (21) befinden, wobei die Hauptschaltungsplatine (23), die Batterie (29) und die Hilfsschaltungsplatine (24) der Reihe nach in einer Längsrichtung der Untereinheit (2) angeordnet sind, wobei eine Länge der Hauptschaltungsplatine (23) in der Längsrichtung der Untereinheit (2) größer als eine Länge der flexiblen Schaltungsplatine (28) in der Längsrichtung der Untereinheit (2) ist, und eine Länge der Hilfsschaltungsplatine (24) in der Längsrichtung der Untereinheit (2) kleiner als die Länge der flexiblen Schaltungsplatine (28) in der Längsrichtung der Untereinheit (2) ist.

3. Endgerätvorrichtung (100) nach Anspruch 1, wobei ein Bereich der Hauptschaltungsplatine (23) größer als ein Bereich der Hilfsschaltungsplatine (24) ist, wobei die Hauptschaltungsplatine (23) die daran bereitgestellte Ausweichnut (2a) aufweist, und der piezoelektrische Keramikempfänger (25) mit der Hauptschaltungsplatine (23) verbunden ist.

4. Endgerätvorrichtung (100) nach Anspruch 1, wobei eine Dicke der Untereinheit (2) größer als oder gleich 3 mm und kleiner als oder gleich 4 mm ist; und wenn die Untereinheit (2) abnehmbar mit der Haupteinheit (1) verbunden ist, eine maximale Dicke der Endgerätvorrichtung (100) größer als oder gleich 7 mm und kleiner als oder gleich 10 mm ist.

5. Endgerätvorrichtung (100) nach einem der Ansprüche 1 bis 3, wobei die Untereinheit (2) ferner ein Fingerabdruckerkennungsmodul umfasst, wobei die Hauptschaltungsplatine (23) eine Durchgangsöffnung (23a) definiert, wobei sich zumindest ein Teil des Fingerabdruckerkennungsmoduls in der Durchgangsöffnung (23a) der Hauptschaltungsplatine (23) befindet, und eine Erkennungsfläche des Fingerabdruckerkennungsmoduls dem Anzeigebildschirm (21) zugewandt ist.

6. Endgerätvorrichtung (100) nach einem der Ansprüche 1 bis 3, wobei die Untereinheit (2) ferner ein Gehäuse (22) umfasst, wobei das Gehäuse (22) einen mittleren Rahmen (221) und eine Batterieabdeckung (222) umfasst, wobei der mittlere Rahmen (221) eine erste Fläche (221a) und eine zweite Fläche (221b) aufweist, die einander gegenüberliegen, wobei der Anzeigebildschirm (21) mit der ersten Fläche (221a) verbunden ist, und die Batterieabdeckung (222) mit der zweiten Fläche (221b) verbunden ist; und eine Stützplatte (223) in dem mittleren Rahmen (221) ausgebildet ist, und die Stützplatte (223) eine Komponente in dem mittleren Rahmen (221) fixiert.

7. Endgerätvorrichtung (100) nach Anspruch 6, wobei die Stützplatte (223) eine erste Unterplatte (2231) und eine zweite Unterplatte (2232) umfasst, die voneinander beabstandet sind; wobei die erste Unterplatte (2231) und die zweite Unterplatte (2232) voneinander beabstandet sind, um einen Raum zum Aufnehmen der Batterie (29) zu definieren; und die erste Unterplatte (2231) an der Hilfsschaltungsplatine (24) fixiert ist, und die zweite Unterplatte (2232) an der Hauptschaltungsplatine (23) fixiert ist.

8. Endgerätvorrichtung (100) nach Anspruch 6, wobei die Stützplatte (223) eine erste Gruppe von Unterplatten (2233) und eine zweite Gruppe von Unterplatten (2234) umfasst, die voneinander beabstandet sind, wobei die erste Gruppe von Unterplatten (2233) zwei Unterplatten umfasst, und die Hilfsschaltungsplatine (24) an der ersten Gruppe von Unterplatten (2233) fixiert ist; und die zweite Gruppe von Unterplatten (2234) zwei Unterplatten umfasst, und die Hauptschaltungsplatine (23) an der zweiten Gruppe von Unterplatten (2234) fixiert ist.

9. Endgerätvorrichtung (100) nach Anspruch 6, wobei die Stützplatte (223) eine dritte Gruppe von Unterplatten (2235) und eine dritte Unterplatte (2236) umfasst, wobei die dritte Gruppe von Unterplatten (2235) zwei Unterplatten umfasst, wobei die zwei Unterplatten der dritten Gruppe von Unterplatten (2235) voneinander beabstandet sind, und die Hilfsschaltungsplatine (24) an der dritten Gruppe von Unterplatten (2235) fixiert ist; und die dritte Unterplatte (2236) an der Hauptschaltungsplatine (23) fixiert ist.

## Revendications

1. Dispositif terminal (100), comprenant :
une unité principale (1) ; et
une sous-unité (2) connectée de façon détachable à l'unité principale (1), la sous-unité (2) comprenant :
un écran d'affichage (21) ;
une carte de circuit imprimé principale (23) ;
une carte de circuit imprimé auxiliaire (24) ; et
un récepteur en céramique piézoélectrique (25) connecté à la carte de circuit imprimé principale (23) ou à la carte de circuit imprimé auxiliaire (24),
dans lequel l'écran d'affichage (21) présente une surface d'affichage (211), la carte de circuit imprimé principale (23), la carte de circuit imprimé auxiliaire (24) et le récepteur en céramique piézoélectrique (25) sont situés sur un côté de l'écran d'affichage (21) orienté à l'opposé de la surface d'affichage (211), **caractérisé en ce que** le récepteur en céramique piézoélectrique (25) est fixé à l'écran d'affichage (21),
une région entourée par une paroi à trou continu de la carte de circuit imprimé principale (23) ou de la carte de circuit imprimé auxiliaire (24) définit une rainure d'évitement (2a) ; ou la carte de circuit imprimé principale (23) ou la carte de circuit imprimé auxiliaire (24) possède une encoche placée sur un bord de celle-ci, et une région entourée par l'encoche définit la rainure d'évitement (2a), et
le récepteur en céramique piézoélectrique (25) est situé dans la rainure d'évitement (2a), et la rainure d'évitement (2a) entoure au moins une partie du récepteur en céramique piézoélectrique (25),
dans lequel une surface de la carte de circuit imprimé principale (23) est supérieure à une surface de la carte de circuit imprimé auxiliaire (24), la carte de circuit imprimé auxiliaire (24) possède la rainure d'évitement (2a) placée sur elle, et le récepteur en céramique piézoélectrique (25) est connecté à la carte de circuit imprimé auxiliaire (24) ; et la sous-unité (2) comprend en outre une carte de circuit imprimé flexible (28) connectée à l'écran d'affichage (21), la carte de circuit imprimé flexible (28) est située entre l'écran d'affichage (21) et la carte de circuit imprimé principale (23), et une extrémité de la carte de circuit imprimé flexible (28) s'étend vers un côté de la carte de circuit imprimé principale (23) orienté à l'opposé de l'écran d'affichage (21) par le biais d'une position périphérique de la carte de circuit imprimé principale (23) et est connectée à la carte de circuit imprimé principale (23).

2. Dispositif terminal (100) selon la revendication 1, comprenant en outre une batterie (29), dans lequel la batterie (29) et la carte de circuit imprimé auxiliaire (24) sont situées sur le côté de l'écran d'affichage (21) orienté à l'opposé de la surface d'affichage (211), la carte de circuit imprimé principale (23), la batterie (29) et la carte de circuit imprimé auxiliaire (24) sont disposées en séquence dans le sens de la longueur de la sous-unité (2), une longueur de la carte de circuit imprimé principale (23) dans le sens de la longueur de la sous-unité (2) est supérieure à une longueur de la carte de circuit imprimé flexible (28) dans le sens de la longueur de la sous-unité (2), et une longueur de la carte de circuit imprimé auxiliaire (24) dans le sens de la longueur de la sous-unité (2) est inférieure à la longueur de la carte de circuit imprimé flexible (28) dans le sens de la longueur de la sous-unité (2).

3. Dispositif terminal (100) selon la revendication 1, dans lequel une surface de la carte de circuit imprimé principale (23) est supérieure à une surface de la carte de circuit imprimé auxiliaire (24), la carte de circuit imprimé principale (23) possède la rainure d'évitement (2a) placée sur elle, et le récepteur en céramique piézoélectrique (25) est connecté à la carte de circuit imprimé principale (23).

4. Dispositif terminal (100) selon la revendication 1, dans lequel une épaisseur de la sous-unité (2) est supérieure ou égale à 3 mm et inférieure ou égale à 4 mm ; et lorsque la sous-unité (2) est connectée de façon détachable à l'unité principale (1), une épaisseur maximale du dispositif terminal (100) est supérieure ou égale à 7 mm et inférieure ou égale à 10 mm.

5. Dispositif terminal (100) selon l'une quelconque des revendications 1 à 3, dans lequel la sous-unité (2) comprend en outre un module de reconnaissance d'empreinte digitale, la carte de circuit imprimé principale (23) définit un trou traversant (23a), et au moins une partie du module de reconnaissance d'empreinte digitale est située dans le trou traversant (23a) de la carte de circuit imprimé principale (23), et une surface de reconnaissance du module de reconnaissance d'empreinte digitale est orientée vers l'écran d'affichage (21).

6. Dispositif terminal (100) selon l'une quelconque des revendications 1 à 3, dans lequel la sous-unité (2) comprend en outre un boîtier (22), le boîtier (22) comprend une structure intermédiaire (221) et un couvercle de batterie (222), la structure intermédiaire (221) a une première surface (221a) et une seconde surface (221b) qui sont opposées l'une à l'autre, l'écran d'affichage (21) est relié à la première surface (221a), et le couvercle de batterie (222) est relié à la seconde surface (221b) ; et une plaque de support (223) est formée à l'intérieur de la structure intermédiaire (221), et la plaque de support (223) fixe un composant dans la structure intermédiaire (221).

7. Dispositif terminal (100) selon la revendication 6, dans lequel la plaque de support (223) comprend une première sous-plaque (2231) et une deuxième sous-plaque (2232) qui sont espacées l'une de l'autre ; la première sous-plaque (2231) et la deuxième sous-plaque (2232) sont espacées l'une de l'autre pour définir un espace destiné à loger la batterie (29) ; et la première sous-plaque (2231) est fixée à la carte de circuit imprimé auxiliaire (24), et la deuxième sous-plaque (2232) est fixée à la carte de circuit imprimé principale (23).

8. Dispositif terminal (100) selon la revendication 6, dans lequel la plaque de support (223) comprend un premier groupe de sous-plaques (2233) et un deuxième groupe de sous-plaques (2234) qui sont espacés l'un de l'autre, le premier groupe de sous-plaques (2233) comprend deux sous-plaques, et la carte de circuit imprimé auxiliaire (24) est fixée au premier groupe de sous-plaques (2233) ; et le deuxième groupe de sous-plaques (2234) comprend deux sous-plaques, et la carte de circuit imprimé principale (23) est fixée au deuxième groupe de sous-plaques (2234).

9. Dispositif terminal (100) selon la revendication 6, dans lequel la plaque de support (223) comprend un troisième groupe de sous-plaques (2235) et une troisième sous-plaque (2236), le troisième groupe de sous-plaques (2235) comprend deux sous-plaques, les deux sous-plaques du troisième groupe de sous-plaques (2235) sont espacées l'une de l'autre, et la carte de circuit imprimé auxiliaire (24) est fixée au troisième groupe de sous-plaques (2235) ; et la troisième sous-plaque (2236) est fixée à la carte de circuit imprimé principale (23).
